(19) **Europäisches Patentamt**

**European Patent Office**

**Office européen des brevets**

(11) Veröffentlichungsnummer: **0 276 777**
**A2**

(12) **EUROPÄISCHE PATENTANMELDUNG**

(21) Anmeldenummer: **88100914.6**

(22) Anmeldetag: **22.01.88**

(51) Int. Cl.⁴: **C07F 9/09**

(30) Priorität: **30.01.87 DE 3702766**

(43) Veröffentlichungstag der Anmeldung:
**03.08.88 Patentblatt 88/31**

(84) Benannte Vertragsstaaten:
**AT BE CH DE ES FR GB GR IT LI NL SE**

(71) Anmelder: **Henkel Kommanditgesellschaft auf Aktien**
**Postfach 1100 Henkelstrasse 67**
**D-4000 Düsseldorf-Holthausen(DE)**

(72) Erfinder: **Uphues, Günter**
**Robert-Koch.-Strasse 45**
**D-4019 Monheim(DE)**
Erfinder: **Ploog, Uwe, Dr.**
**Haydnweg 6**
**D-5657 Haan(DE)**
Erfinder: **Bischof, Klaudia**
**Selmer Strasse 10**
**D-4712 Werne(DE)**

(54) **Verfahren zur Herstellung und Isolierung von Monoalkylphosphorsäureestern.**

(57) Bei der Herstellung von Monoalkylphosphorsäureestern setzt man wenigstens einen Fettalkohol oder Gemische von Fettalkoholen mit 8 bis 18 C-Atomen und vorzugsweise geradkettige mit 12 bis 14 C-Atomen mit einem 0,2 bis 2-molaren Überschuß an Polyphosphorsäure bei einer Temperatur von 60 bis 130 °C um, hydrolysiert nach einer Nachreaktionszeit von 120 bis 300 min bei einer Temperatur von 95 bis 105 °C langsam mit 0,5 bis 1,0 Mol Wasser, bezogen auf die Menge der in der Reaktionsmischung befindlichen Phosphoratome, bei 90 bis 100°C, neutralisiert mit verdünntem Alkalihydroxid zu 40 bis 65 %, vorzugsweise zu 50 bis 60 %, bezogen auf die Säurezahl und trennt nach einer Verweilzeit von 30 bis 180 min bei einer Temperatur im Bereich von 50 bis 95°C die sich bildenden zwei Schichten voneinander.

EP 0 276 777 A2

## Verfahren zur Herstellung und Isolierung von Monoalkylphosphorsäureestern

Die vorliegende Erfindung betrifft die Umsetzung von langkettigen Fettalkoholen mit Polyphosphorsäure zur Bildung von Monoalkylphosphorsäureestern und deren Abtrennung von der bei der Reaktion entstandenen ortho-Phosphorsäure.

Monoalkylphosphorsäureester (Monoalkylphosphate) werden in der Technik durch Umsetzung von Alkoholen mit Phosphoroxidchlorid hergestellt. G. Imokawa "Journal of the American Oil Chemists' Society", 55, 839 (1979) beschreibt ein entsprechendes, lösungsmittelfreies Umsetzungsverfahren. Nach Beendigung der Umsetzung wird durch Zugabe von Wasser überschüssiges Phosphoroxidchlorid hydrolysiert und die entstandene Phosphorsäure durch eine Ether/Wasser-Extraktion abgetrennt.

DE-AS 23 50 851 beschreibt ein Verfahren zur Umsetzung von Alkoholen mit Phosphoroxidchlorid in einem Verhältnis von 1,1 Mol Phosphoroxidchlorid je Mol Ausgangsstoff (Alkohol), wobei die Umsetzung in Gegenwart von Cycloalkanen und/oder Alkanen als Lösungsmittel durchgeführt wird. Das vorgenannte Verfahren arbeitet in verdünnten Lösungen. Wegen der bei der Reaktion freigesetzten Menge an Chlorwasserstoff (3 Mol/Monoalkylphosphat) setzt das Verfahren besondere technologische Anforderungen voraus. Nach der DE-AS 23 50 851 ist die Gegenwart von Lösungsmitteln erforderlich, um Nebenreaktionen, wie z.B. die Bildung von Diestern, zu vermeiden. Die Umsetzung zur Herstellung von Monoalkylphosphaten wird daher in sehr viel Cyclohexan durchgeführt.

Nach Ullmanns Encyklopädie der technischen Chemie, 4. Auflage, Band 18, Seite 389, entstehen Mono-Phosphorsäureester neben freier Phosphorsäure bei der Reaktion der Alkohole mit Polyphosphorsäure. Die bei der Reaktion entstehende Phosphorsäure stört insbesondere bei kosmetischen Produkten, Elektrolytlösungen, Emulsionen oder auch in der Synthesespinnerei.

Die Aufgabe der vorliegenden Erfindung bestand darin, einen Weg zur Herstellung und Isolierung von Monoalkylphosphaten bereitzustellen, der insbesondere die Verwendung von Phosphoroxidchlorid und die daraus entstehenden Probleme der freigesetzten Mengen an Chlorwasserstoff vermeidet. Weiterhin bestand die Aufgabe der vorliegenden Erfindung darin, die bei der Reaktion eines Alkohols mit Polyphosphorsäure entstehende Phosphorsäure in einem einfachen und wenig aufwendigen Verfahren abzutrennen.

Demgemäß werden Fettalkohole mit einer Kettenlänge von mehr als 8 C-Atomen mit einem Überschuß an Polyphosphorsäure, gegebenenfalls in Gegenwart inerter Lösungsmittel, zur Reaktion gebracht. Zur Spaltung noch vorhandener Polyphosphorsäurebindungen (P-O-P) wird das Reaktionsgemisch zunächst mit wenig Wasser behandelt, danach das Lösungsmittel entfernt und anschließend, bezogen auf die Säurezahl, zu 60 % mit verdünntem Alkalihydroxid, vorzugsweise NaOH, teilneutralisiert. Nach kurzer Verweilzeit in der Wärme trennt sich die ca. 30 %ige Dispersion in zwei Schichten; die obere, ca. 60 %ige Phase enthält überraschenderweise das gesamte Monoalkylphosphat, während sich die Phosphorsäure nahezu komplett in der unteren Phase befindet.

Gegenstand der vorliegenden Erfindung ist somit ein Verfahren zur Herstellung und Isolierung von Monoalkylphosphorsäureestern, das dadurch gekennzeichnet ist, daß man

(a) wenigstens einen Fettalkohol oder Gemische von Fettalkoholen mit 8 bis 18 C-Atomen und vorzugsweise geradkettige mit 12 bis 14 C-Atomen, mit einem 0,2 bis 2-molaren Überschuß an Polyphosphorsäure bei einer Temperatur von 60 bis 130°C umsetzt,

(b) nach einer Nachreaktionszeit von 120 bis 300 min bei einer Temperatur von 90 bis 130 °C langsam mit 0,5 bis 1,0 Mol Wasser, bezogen auf die Menge der in der Reaktionsmischung befindlichen Phosphoratome bei 90 bis 100°C hydrolysiert,

(c) mit verdünntem Alkalihydroxid zu 40 bis 65 % und vorzugsweise zu 50 bis 60 %, bezogen auf die Säurezahl, teilneutralisiert und

(d) nach einer Verweilzeit von 30 bis 180 min bei einer Temperatur im Bereich von 50 bis 95 °C die sich bildenden zwei Schichten voneinander trennt.

Als Fettalkohole im Sinne der vorliegenden Erfindung seien insbesondere genannt: Octylalkohol, Nonylalkohol, Decylalkohol, Undecylalkohol, Dodecylalkohol, Tridecylalkohol, Tetradecylalkohol, Pentadecylalkohol und Hexadecylalkohol, Octadecylalkohol und Octadecenylalkohol.

Das gemäß der vorliegenden Erfindung bevorzugte Alkalihydroxid ist Natriumhydroxid, das in fester From oder bevorzugt in Form 10 bis 60 gewichtsprozentiger, insbesondere 30 bis 50 gewichtsprozentiger wäßriger Lösungen eingesetzt wird.

Nach einer Ausführungsform der vorliegenden Erfindung kann die Umsetzung des Fettalkohols mit Polyphosphorsäure in einem inerten Lösungsmittel durchgeführt werden, das ausgewählt ist aus der aus Aromaten, Alkanen und Cycloalkanen mit Siedepunkten im Bereich von 60 bis 140 °C bestehenden Gruppe.

Gemäß einer weiteren Ausführungsform der vorliegenden Erfindung kann der unumgesetzte Alkohol durch Dämpfen im Vakuum bei 0,1 bis 20 mbar aus lösungsmittelfreiem Rohester bei einer Temperatur von 80 bis 120 °C entfernt werden.

Phosphatierungen mit Polyphosphorsäure, einer hochviskosen, sirupösen Flüssigkeit, führen ausschließlich zu Monoestern. Dabei ist es gleichgültig, ob man für die Reaktion den Alkohol oder die Polyphosphorsäure (PPS) vorlegt (Tabelle 1); die Zusammensetzung der resultierenden Mischungen ist nahezu identisch.

**Tabelle 1   Reihenfolge der Zugabe**

| | molare Relation Mono-/Di-ester | Zusammensetzung (Gew.-%) | | | | |
|---|---|---|---|---|---|---|
| | | Mono-ester | Di-ester | Tri-ester | freie $H_3PO_4$ | freier Alkohol |
| Alkohol vorgelegt | 49,0 | 49,8 | 1,6 | 4,4 | 8,6 | 35,6 |
| PPS vor-gelegt | nur Mono | 50,1 | – | 3,0 | 9,5 | 37,4 |

ROH/P = 1,5
Alkohol: n-Octanol
Zugabe: 50 bis 70°C
Nachreaktion: 300 min bei 95 bis 105°C
Hydrolyse: 180 min bei 100°C

Trotz langer Reaktionszeiten und relativ hoher Temperatur (bis 130°C) verbleiben, je nach Einsatzverhältnis, große Mengen an freiem Alkohol oder Phosphorsäure (Tabelle 2). Für eine verläßliche Analyse der Reaktionsprodukte ist die Hydrolyse der P-O-P-Bindungen von größter Wichtigkeit. Die Wasserbehandlung mit mindestens 0,5 Mol/P sollte im Verlauf von 3 h bei 90 bis 100°C durchgeführt werden. Bei kleinem ROH/P-Verhältnis ist es empfehlenswert, die Zeit auf 5 h auszudehnen.

**Tabelle 2   Einsatzverhältnis und verschiedene Alkohole**

| Bsp. | ROH/P | molare Relation Mono-/Di- | Zusammensetzung (Gew.-%) | | | | |
|---|---|---|---|---|---|---|---|
| | | | Mono-ester | Di-ester | Tri-ester | freie $H_3PO_4$ | freier Alkohol |
| 1 | 0,93 | nur Mono | 66,6 | – | 5,5 | 11,0 | 16,9 |
| 2 | 0,73 | " " | 73,9 | – | 5,8 | 16,6 | 4,0 |
| 3 | 0,93 | nur Mono | 59,1 | – | 5,8 | 21,2 | 13,9 |
| 4 | 1,50 | 49 | 49,8 | 1,6 | 4,4 | 8,6 | 35,6 |

Als Alkohol wurde in den Beispielen 1 und 2 ein Laurylalkohol mit 12 bis 14 C-Atomen, enthaltend ca.

70 % Dodecanol und ca. 30 % Tetradecanol, verwendet.

In den Beispielen 3 und 4 wurde n-Octanol als Alkohol verwendet.

Bei nicht zu großen Mengen kann der freie Alkohol durch Dämpfung im Vakuum bei 110 bis 120°C entfernt werden.

Problematischer ist die Entfernung der Phosphorsäure. Nach üblichen Auswaschmethoden der präprartiven Chemie werden fast immer unvollständig trennende Dispersionen erhalten, die selbst bei Zusatz von Salzen und/oder Lösungsmitteln stabil bleiben. Überraschend gelang eine quantitative Abtrennung im Falle des Lauryl-Myristylalkoholesters. Dazu wurde eine 30 %ige wäßrige Dispersion mit Natronlauge teilneutralisiert (ca. 60 % bez. auf SZ).

Nach kurzem Verweilen bei 80°C wurde eine fast klare untere Phase abgetrennt, die nahezu quantitativ das gesamte anorganische Phosphat enthielt, während in der oberen, ca. 60%igen Phase nur noch Spuren anorganischen Phosphats festgestellt werden konnten.

Die nachfolgenden Beispiele beschreiben Ausführungsformen der vorliegenden Erfindung.

### Beispiel 1

In einer mit Thermometer und Rückflußkühler ausgestatteten Rührapparatur wurden 582 g (3,0 Mol) eines Gemisches aus Lauryl-und Myristylalkohol (OHZ = 289,2) und 200 ml Toluol vorgelegt. Bei einer Temperatur von 80 °C wurden über einen heizbaren Tropftrichter 345 g einer auf 60 °C erwärmten Polyphosphorsäure mit einem rechnerischen Gehalt von 84,5 % Phosphorpentoxid innerhalb 15 min zugesetzt. Nachdem das Gemisch 3 h bei 90 °C gerührt hatte, wurden zur Hydrolyse von P-O-P-Bindungen 82 g Wasser hinzugefügt und das Rühren bei 90 °C weitere 5 h fortgesetzt.

Danach wurde die Apparatur durch Einbau eines Wasserabscheiders umgerüstet und aus dem Produkt wurden unter Sieden am Rückfluß 54 g Wasser ausgekreist.

Nach der destillativen Entfernung des Toluols bei einem Druck von 20 mbar und einer Temperatur von 110 °C wurde der Druck auf 5 mbar erniedrigt und bei gleicher Temperatur der nicht umgesetzte Alkohol durch Dämpfung ausgetrieben.

Es wurden 913,5 g eines beim Abkühlen erstarrenden Produktes erhalten, dessen Zusammensetzung, bestimmt über eine potentiometrische Mehrstufentitration, sich wie folgt ergab:

81,8 % Monoalkylester
4,0 % Dialkylester
15,2 % o-Phosphorsäure

Die SZ betrug 466,4.

Zur Abtrennung der Phosphorsäure wurden 370 g des rohen Esters mit 148 g 50 %iger Natronlauge nach vorheriger Verdünnung mit 851 g Wasser zu 60 % teilneutralisiert. Das Gemisch wurde in einen heizbaren Scheidetrichter überführt und 1 h bei 80 °C gehalten. Die dabei entstandenen Phasen wurden getrennt und analysiert.

Die obere, milchig-disperse Phase (602 g) enthielt

36,9 % Wasser
0,36 % anorganisch und
5,52 % organisch gebundenen Phosphor.

Die untere, schwach getrübte Phase (766 g) enthielt

88,4 % Wasser
2,0 % anorganisch und
0,16 % organisch gebundenen Phosphor.

### Beispiel 2

200 g des nach Beispiel 1 erhaltenen rohen Esters wurden mit 462 g Wasser gemischt und mit 66,5 g 50 %iger Natronlauge zu 50 % teilneutralisiert. Nach 1-stündigem Verweilen bei 65 °C wurden die entstandenen Phasen getrennt und analysiert.

4

Die obere, nach dem Abkühlen milchig-disperse Phase (432 g) enthielt

0,16 % anorganisch und
3,59 % organisch gebundenen Phosphor.

Die untere, trübe Phase (252 g) enthielt

2,28 % anorganisch und
0,17 % organisch gebundenen Phosphor.


Beispiel 3

Nach der im Beispiel 1 beschriebenen Methode wurden 398,8 g (1,5 Mol) eines Oleyl-Cetylalkohol-Gemisches (OHZ = 211; JZ = 55), 172,2 g Polyphosphorsäure, 150 ml Toluol und 41,0 g Wasser zum Monoalkylphosphat umgesetzt. Die Ausbeute betrug 586 g; die Analyse ergab die folgende Zusammensetzung:

81,0 % Monoalkylphosphat
8,4 % Dialkylphosphat
10,6 % o-Phosphorsäure.

Die SZ war 345,9.
200 g des rohen Esters wurden mit 462 g Wasser gemischt und mit 59,2 g 50 %iger Natronlauge zu 60 % teilneutralisiert, 2 h bei 65 °C stehengelassen und dann die entstandenen Phasen getrennt.
Die Analyse zeigte das folgende Ergebnis:
Die obere, nach dem Abkühlen pastöse Phase (404,8 g) enthielt

1,07 % anorganisch und
3,3 % organisch gebundenen Phosphor.

Die untere, wenig getrübte Phase (220 g) enthielt

2,23 % anorganisch und
0,07 % organisch gebundenen Phosphor.


Beispiel 4

Nach der im Beispiel 1 beschriebenen Methode wurden 390 g (1,5 Mol) Talgalkohol (OHZ = 215,8), 172,2 g Polyphosphorsäure, 150 ml Toluol und 41,0 g Wasser zum Monoalkylphosphat umgesetzt. Die Ausbeute betrug 560,7 g; die Analyse ergab die folgende Zusammensetzung:

78,7 % Monoalkylphosphat
9,0 % Dialkylester
12,3 % o-Phosphorsäure.

Die SZ war 365,9.
200 g des rohen Esters wurden mit 462 g Wasser gemischt und mit 62,8 g 50 %iger Natronlauge zu 60 % teilneutralisiert, 2 h bei 65 °C stehengelassen und dann die entstandenen Phasen getrennt.
Die Analyse zeigte das folgende Ergebnis:

Die obere, pastenartige Phase (392,5 g) enthielt

0,80 % anorganisch und
3,61 % organisch gebundenen Phosphor.

Die untere, fast klare Phase (211 g) enthielt

2,08 % anorganisch und
0,13 % organisch gebundenen Phosphor.

Vergleichsbeispiel

200 g des nach Beispiel 1 erhaltenen rohen Esters wurden mit 460 g Wasser gemischt und mit 93 g 50 %iger Natronlauge zu 70 % teilneutralisiert. Nach 1-stündigem Verweilen bei 65 °C wurden die entstandenen, schwer zu unterscheidenden Phasen getrennt und analysiert.

Die obere, nach dem Abkühlen pastöse Phase (163,6 g) enthielt

1,08 % anorganisch und
4,52 % organisch gebundenen Phosphor.

Die untere, milchig-disperse Phase (543 g) enthielt

1,62 % anorganisch und
1,22 % organisch gebundenen Phosphor.

Bei 70 %iger Neutralisation ist also nur noch ein mäßiger Trenneffekt zu erkennen.

## Ansprüche

1. Verfahren zur Herstellung und Isolierung von Monoalkylphosphorsäureestern, dadurch gekennzeichnet, daß man

(a) wenigstens einen Fettalkohol oder Gemische von Fettalkoholen mit 8 bis 18 C-Atomen und vorzugsweise geradkettige mit 12 bis 14 C-Atomen mit einem 0,2 bis 2,0-molaren Überschuß an Polyphosphorsäure bei einer Temperatur von 60 bis 130°C umsetzt,

(b) nach einer Nachreaktionszeit von 120 bis 300 min bei einer Temperatur von 95 bis 105°C langsam mit 0,5 bis 1,0 Mol Wasser, bezogen auf die Menge der in der Reaktionsmischung befindlichen Phosphoratome bei 90 bis 100°C hydrolysiert,

(c) mit verdünntem Alkalihydroxid zu 40 bis 65 % und vorzugsweise zu 50 bis 60 %, bezogen auf die Säurezahl, teilneutralisiert und

(d) nach einer Verweilzeit von 30 bis 180 min bei einer Temperatur im Bereich von 50 bis 95 °C die sich bildenden zwei Schichten voneinander trennt.

2. Verfahren nach Anspruch 1, dadurch gekennzeichnet, daß die Fettalkohole ausgewählt sind aus der aus Octylalkohol, Nonylalkohol, Decylalkohol, Undecylalkohol, Dodecylalkohol, Tridecylalkohol, Tetradecylalkohol, Pentadecylalkohol, Hexadecylalkohol, Octadecylalkohol und Octadecenylalkohol bestehenden Gruppe.

3. Verfahren nach Anspruch 1, dadurch gekennzeichnet, daß das Alkalihydroxid NaOH ist und in fester Form oder in Form 10 bis 60 gewichtsprozentiger, insbesondere 30 bis 50 gewichtsprozentiger wäßriger Lösungen eingesetzt wird.

4. Verfahren nach Ansprüchen 1 bis 3, dadurch gekennzeichnet, daß man die Reaktion in einem inerten Lösungsmittel durchführt.

5. Verfahren nach Anspruch 4, dadurch gekennzeichnet, daß das inerte Lösungsmittel ausgewählt ist aus der aus Aromaten, Alkanen und Cycloalkanen mit Siedepunkten im Bereich von 60 bis 140 °C bestehenden Gruppe.

6. Verfahren nach Ansprüchen 1 bis 5, dadurch gekennzeichnet, daß man den unumgesetzten Alkohol durch Dämpfen im Vakuum bei 0,1 bis 20 mbar aus dem lösungsmittelfreien Rohester bei einer Temperatur von 80 bis 120°C entfernt.